# EUROPÄISCHE PATENTSCHRIFT

(11) **EP 2 063 342 B1**
(45) Veröffentlichungstag und Bekanntmachung des Hinweises auf die Patenterteilung: **09.08.2017**
(21) Anmeldenummer: 08168501.8
(22) Anmeldetag: 06.11.2008
(51) Int. Cl.: G06F 1/32

(54) **Stromversorgungsschaltung für ein elektronisches Gerät, Computer mit einer Stromversorgungsschaltung und Energiesparverfahren**
Power supply circuit for an electronic device, computer with a power supply switch and energy saving procedure
Circuit d'alimentation électrique pour un appareil électronique, ordinateur doté d'un circuit d'alimentation électrique et procédé d'économie d'énergie

(30) Priorität: 20.11.2007 DE 102007055231
(43) Veröffentlichungstag der Anmeldung: 27.05.2009
(73) Patentinhaber: Fujitsu Technology Solutions Intellectual Property GmbH, 80807 München (DE)
(72) Erfinder: Köhn, Immanuel, 86165 Augsburg (DE)
(74) Vertreter: Epping - Hermann - Fischer

(56) Entgegenhaltungen:
- EP-A1- 1 491 988
- WO-A2-99/44116
- US-A1- 2006 053 322

## Beschreibung

Die Erfindung betrifft eine Stromversorgungsschaltung für ein elektronisches Gerät, aufweisend einen Energiespeicher zum Speichern elektrischer Energie, eine Einschalttaste und eine Energieverwaltungsschaltung, die dazu eingerichtet ist, die Einschalttaste auf eine Betätigung zu überwachen und das elektronische Gerät zeit- oder ferngesteuert in einen Betriebszustand zu schalten, in dem das elektronische Gerät mit elektrischer Energie versorgt wird. Die Erfindung betrifft außerdem einen Computer und ein Energiesparverfahren.

Stromversorgungsschaltungen der oben genannten Art sind vielfach bekannt. Insbesondere weisen eine Vielzahl von elektronischen Geräten im Allgemeinen und batteriebetriebenen Computern im Besonderen so genannte Standby-Zustände auf. Bei den bekannten Geräten werden Teile des elektronischen Gerätes durch die Energieverwaltungsschaltung in dem Standby-Zustand noch mit Energie versorgt. Beispielsweise können eine Zeitsteuerung oder eine Schnittstellenvorrichtung weiter mit elektrischer Energie versorgt werden, um ein einfaches Einschalten des elektronischen Gerätes zu ermöglichen.

Ein Nachteil der bekannten Stromversorgungsschaltungen liegt darin, dass die Energieverwaltungsschaltung selber mit einem Betriebsstrom versorgt werden muss, um deren korrekte Funktion zu gewährleisten. Dies ist insbesondere bei batteriebetriebenen Geräten von Nachteil, weil es deren Betriebsdauer verkürzt und zu einer Tiefentladung der verwendeten Batterien führen kann.

Aus der US 2006/0053322 A1 ist eine Schaltung zum Sparen von elektrischer Energie einer Batterie in einer elektronischen Vorrichtung bekannt. Die Schaltung umfasst einen Schalterstromkreis, einen Spannungsregler, eine Energieverwaltungseinheit und einen Systemspannungsanschluss. Wenn das elektronische Gerät abgeschaltet ist, liefert der Schalterstromkreis keine elektrische Energie an die Energieverwaltungsschaltung. Ein Nachteil der dort beschriebenen Lösung liegt darin, dass die elektronische Vorrichtung nicht zeit- oder ferngesteuert aktiviert werden kann.

Aufgabe der vorliegenden Erfindung ist es, eine Stromversorgungsschaltung mit einem besonders geringen Energiebedarf für ein zeit- oder fernsteuerbares Gerät zu beschreiben. Darüber hinaus soll ein Computer mit einer derartigen Stromversorgungsschaltung und ein dafür geeignetes Energiesparverfahren beschrieben werden.

Die Lösung der zugrunde liegenden Aufgabe ist in den Patentansprüchen angegeben. Die Erfindung wird nachfolgend an Ausführungsbeispielen anhand der Zeichnungen näher erläutert. In den Zeichnungen zeigen:
- Figur 1: eine schematische Darstellung einer ersten Ausgestaltung einer Stromversorgungsschaltung,
- Figur 2: ein Zustandsdiagramm der Stromversorgungsschaltung gemäß Figur 1,
- Figur 3: einen Schaltplan gemäß einer weiteren Ausgestaltung einer Stromversorgungsschaltung und
- Figur 4: den zeitlichen Verlauf einiger Steuersignale der Stromversorgungsschaltung gemäß Figur 3.

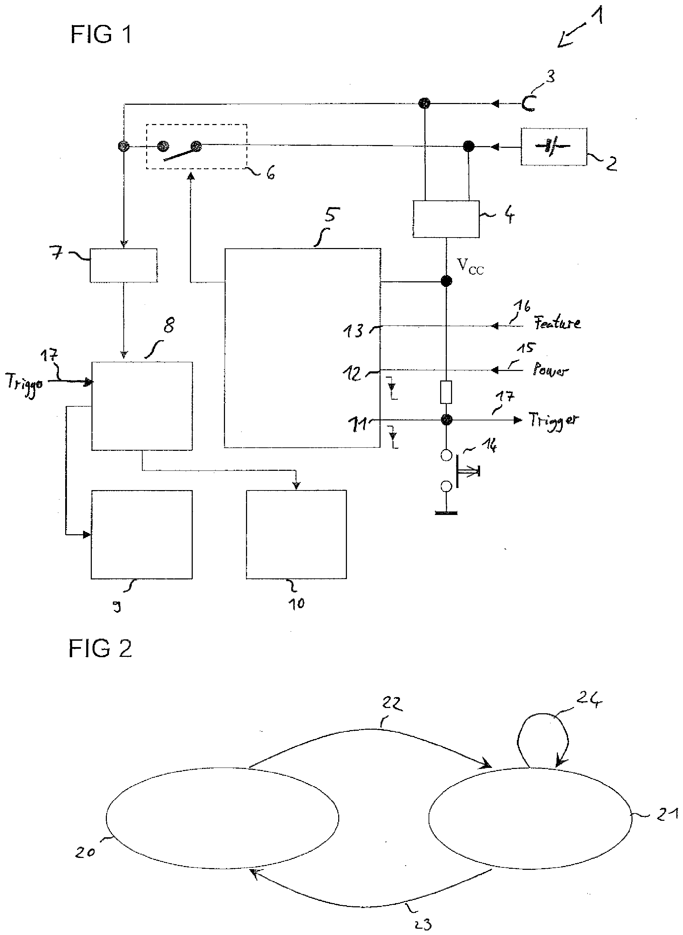

Figur 1 zeigt eine Stromversorgungsschaltung 1 eines elektronischen Geräts. Bei dem elektronischen Gerät handelt es sich beispielsweise um ein Gerät der Unterhaltungselektronik mit einem oder mehreren Betriebszuständen.

Die Stromversorgungsschaltung 1 umfasst eine aufladbare Batterie 2. Des Weiteren umfasst die Stromversorgungsschaltung 1 einen Spannungseingang 3 zum Zuführen einer externen Betriebsspannung. Die Spannung der aufladbaren Batterie 2 und des Spannungseingangs 3 werden einem ersten Spannungswandler 4 zugeführt, der seine Ausgangsspannung V_{CC} an eine Steuerschaltung 5 bereitstellt. Die Steuerschaltung 5 steuert einen Schalter 6, der die aufladbare Batterie 2 mit einem zweiten Spannungswandler 7 verbindet. Der Spannungseingang 3 ist im dargestellten Ausführungsbeispiel dauerhaft mit dem zweiten Spannungswandler 7 verbunden.

Der Ausgang des zweiten Spannungswandlers 7 ist mit einer Energieverwaltungsschaltung 8 verbunden. Die Energieverwaltungsschaltung 8 ist des Weiteren mit einer ersten Komponente 9 und einer zweiten Komponente 10 verbunden und steuert die Energiezufuhr zu der ersten Komponente 9 und der zweiten Komponente 10.

Beispielsweise kann es sich bei der Energieverwaltungsschaltung 8 um eine so genannte "Power Management Unit" (PMU) bzw. um einen Microcontroller handeln, der wahlweise einen als erste Komponente 9 dienenden Hauptprozessor des Gerätes mit elektrischer Energie versorgt. Unabhängig von der Versorgung der ersten Komponente 9 kann die zweite Komponente 10, beispielsweise eine Schnittstellenvorrichtung, auch bei ausgeschalteter erster Komponente 9 durch die Energieverwaltungsschaltung 8 weiter mit Energie versorgt werden. Beispielsweise ist es möglich, eine Netzwerkschnittstelle mit elektrischer Energie zu versorgen, um eingehende Datenpakete zur Aktivierung des Gerätes zu erkennen. Diese Funktion ist auch unter der Bezeichnung "Wake on LAN" (WoL) bekannt.

Im in der Figur 1 dargestellten Ausführungsbeispiel verfügt die Steuerschaltung 5 über drei Steuereingänge 11, 12 und 13.

Der erste Steuereingang 11 ist mit einem Einschalttaster 14 verbunden. Der zweite Steuereingang 12 ist mit einem so genannten Power-Signal 15 verbunden, das angibt, ob sich das elektronische Gerät in einem Betriebszustand befindet, in dem eine Stromversorgung von Kernkomponenten weiter nötig ist. Hierunter fallen bei Computern nach dem ACPI-Standard beispielsweise der Zustand S0, in dem das System eingeschaltet ist, und der Zustand S3, in dem ein Prozessor zwar abgeschaltet oder zumindest mit reduziertem Arbeitstakt betrieben wird, der Arbeitsspeicher und weitere Komponenten aber weiter mit Strom versorgt werden müssen. Dieser Zustand ist auch als "Suspend to RAM" bekannt. Der dritte Steuereingang 13 ist mit einen so genannten Feature-Signal 16 verbunden, das anzeigt, ob Funktionen wir beispielsweise eine Überwachung von Ein-/Ausgabeschnittstellen oder eine Zeitsteuerung aktiv sind, die zur automatischen oder ferngesteuerten Aktivierung des elektronischen Gerätes führen können. Ein Beispiel einer solchen Funktion ist das oben genannte "Wake on LAN" (WoL).

Mittels eines Spannungsteilers erzeugt der Einschalttaster 14 ein so genanntes Trigger-Signal 17. Insbesondere wird beim Betätigen des Einschalttasters 14 eine abfallende Flanke erzeugt, die der Steuerschaltung 5 und der Energieverwaltungsschaltung 8 zur Verfügung gestellt wird. Das Power-Signal 15 gibt an, ob sich das Gerät in einem Betriebs- oder Bereitschaftszustand befindet und daher weiter mit einer Betriebsspannung versorgt werden muss oder vollständig abgeschaltet ist. Das Feature-Signal 16 gibt an, ob in dem Gerät grundsätzlich eine Funktion aktiviert wurde, die zum Aufwecken des Gerätes aus einem ausgeschalteten Zustand, beispielsweise den ACPI-Zuständen S4 oder S5, dient. Beispielsweise kann ein Controller eines Chipsatzes eines Computers ein entsprechendes Steuersignal bereitstellen, solange im BIOS eine Einstellung für "Wake on LAN (WoL)" oder eine ähnliche Funktion ausgewählt ist.

Figur 2 zeigt ein Zustandsdiagramm für die Energieversorgung der Energieverwaltungsschaltung 8 gemäß Figur 1. In einem ersten Zustand 20 wird die Energieverwaltungsschaltung 8 nicht mit einer Betriebsspannung versorgt. Dies entspricht auch dem Grundzustand des elektronischen Gerätes, in dem es sich beispielsweise während einer Auslieferungsphase befindet. In einem zweiten Zustand 21 wird die Energieverwaltungsschaltung 8 mit der Betriebsspannung versorgt.

Gemäß einer ersten Zustandsänderung 22 kann das Gerät in den zweiten Zustand 21 versetzt werden, wenn der Taster 14 gedrückt wird, um das Gerät einzuschalten. Aber auch das Anlegen einer externen Spannung an den Spannungseingang 3 führt zu einem Wechsel in den zweiten Zustand 22.

Gemäß einer zweiten Zustandsänderung 23 wird das Gerät zurück in den ersten Zustand 20 versetzt, wenn das Gerät ausgeschaltet wird, also das Power-Signal 15 auf einen niedriges Niveau absinkt, keine externe Spannung über den Spannungseingang 3 mehr bereitgestellt wird und zugleich das Feature-Signal 16 anzeigt, dass keine Aufweckfunktion aktiviert ist.

Gemäß einer dritten Zustandsänderung 24 führt ein Drücken des Tasters 14 nicht notwendigerweise zur Rückkehr aus dem zweiten Zustand 21 in den ersten Zustand 20. Somit kann der Taster 14 im zweiten Zustand 21 zum Auslösen weitere Funktionen verwendet werden, beispielsweise zum Aktivieren des ACPI S3-Betriebszustandes.

In einer alternativen Ausgestaltung löst der Taster 14 eine vollständige Deaktivierung des Gerätes aus, die über das Power-Signal 15 angezeigt wird. Ist das Feature-Signal 16 währen der Deaktivierung nicht aktiv, führt dies zur Rückkehr in den ersten Zustand 20.

In dem ersten Zustand 20 ist der Schalter 6 in der Energieversorgungsschaltung 1 gemäß Figur 1 geöffnet. Somit werden weder die Energieverwaltungsschaltung 8 noch die daran angeschlossenen Komponenten 9 und 10 mit einer Betriebsspannung versorgt, so dass die Entladung der Batterie 2 durch den Stromverbrauch der Steuerschaltung 5 bestimmt wird. Wird der Einschalttaster 14 betätigt, wird der Schalter 6 geschlossen, so dass die Energieverwaltungsschaltung 8 mit Strom versorgt wird.

In dem zweiten Zustand 21 kann die Energieverwaltungsschaltung 8 dann weitere Steuersignale, wie beispielsweise das Trigger-Signal 17 von dem Einschalttaster 14, auswerten und das elektronische Gerät in einen Betriebszustand versetzen, in dem auch die Komponenten 9 und 10 mit elektrischer Energie versorgt werden.

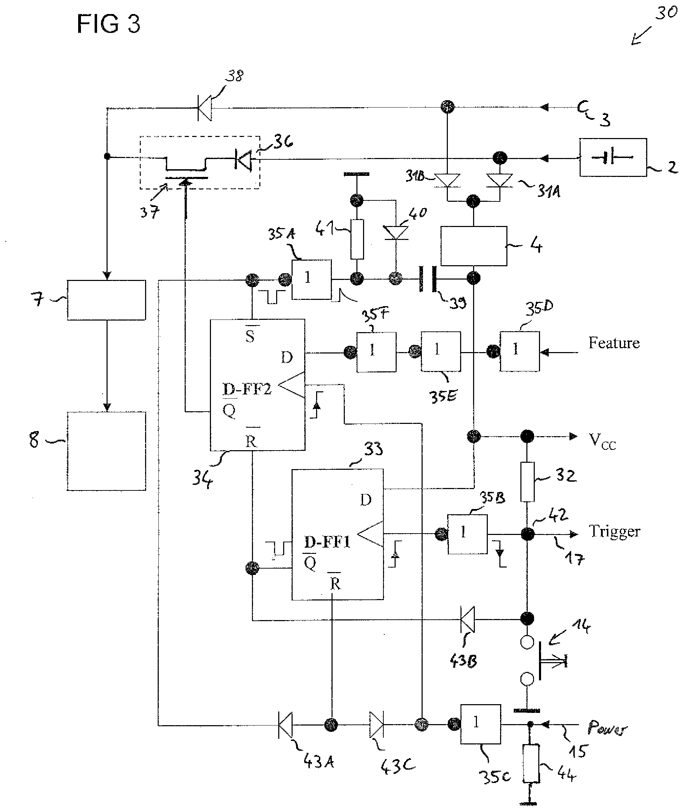

Figur 3 zeigt einen beispielhaften Schaltplan einer Stromversorgungsschaltung 30. Im Ausführungsbeispiel ist die Stromversorgungsschaltung 30 in einen Computer, insbesondere einen Laptop- oder Notebook-Computer integriert.

Die Stromversorgungsschaltung 30 umfasst eine aufladbare Batterie 2 und einen Spannungseingang 3 zum Bereitstellen einer externen Betriebsspannung. Die aufladbare Batterie 2 und der Spannungseingang 3 sind über Dioden 31A und 31B mit einem ersten Spannungswandler 4 verbunden. Der Spannungswandler 4 versorgt einen Spannungsteiler, umfassend einen Widerstand 32 und einen Einschalttaster 14 mit einer Betriebsspannung V_{CC}. Des Weiteren dient der erste Spannungswandler 4 zur Versorgung der in der Figur 3 dargestellten logischen Komponenten. Insbesondere versorgt er zwei so genannte D-Flip-Flops 33 und 34 sowie eine Vielzahl von Invertern 35 über nicht dargestellte Zuleitungen mit der Betriebsspannung V_{CC}.

Die Batterie 2 ist über eine weitere Diode 36 und einen Transistor 37, beispielsweise einen MOSFET-Transistor, mit einem zweiten Spannungswandler 7 verbunden. Des Weiteren ist der Spannungseingang 3 über eine Diode 38 mit dem zweiten Spannungswandler 7 verbunden. Der Spannungswandler 7 speist eine Energieverwaltungsschaltung 8.

Die Energieverwaltungsschaltung 8 ist im Ausführungsbeispiel auf einer Hauptplatine des Computers integriert und übernimmt, gegebenenfalls in Zusammenwirkung mit einem System-BIOS, zahlreiche Energieverwaltungsfunktion. Wird der Energieverwaltungsschaltung 8 entweder von dem Spannungseingang 3 oder von der Batterie 2 über den Transistor 37 eine Spannung zugeführt, nimmt diese ihre übliche Funktion, insbesondere die Ansteuerung weiterer, in der Figur 3 jedoch nicht dargestellter Komponenten, auf.

Beim ersten Anlegen einer Spannung an den Eingang des ersten Spannungswandlers 4 wird über eine Schaltungsanordnung, umfassend einen Kondensator 39, eine Diode 40 und einen Widerstand 41, ein Spannungsimpuls erzeugt. Über den Kondensator 39 wird beim Anlegen der Spannung ein Impuls erzeugt, der über den Widerstand 41 wieder abgebaut wird. Beim Abschalten der Versorgungsspannung wird der Aufbau eines weiteren, unbeabsichtigten Impulses über die Diode 40 verhindert.

Der erzeugte Spannungsimpuls wird durch einen Inverter 35A negiert und dem negierten Set-Eingang *S̅* des zweiten D-Flip-Flops 34 und über eine Diode 43A dem negierten Reset-Eingang *R̅* des ersten D-Flip-Flops 33 zugeführt. Somit befindet sich das erste D-Flip-Flop 33 nach dem Einschalten in einem ausgeschalteten Zustand und das zweite D-Flip-Flop 34 befindet sich in einem eingeschalteten Zustand.

Das invertierte Ausgangssignal *Q̅* des zweiten D-Flip-Flops 34 wird dem Steuereingang des Transistors 37 zugeführt. Da sich der zweite D-Flip-Flop 34 im Grundzustand in einem eingeschalteten Zustand befindet, gibt der invertierte Ausgang *Q̅* in diesem Zustand einen niedrigen Signalpegel aus, so dass der Transistor 37 sperrt und die Energieverwaltungsschaltung 8 nicht mit elektrischen Energie versorgt wird.

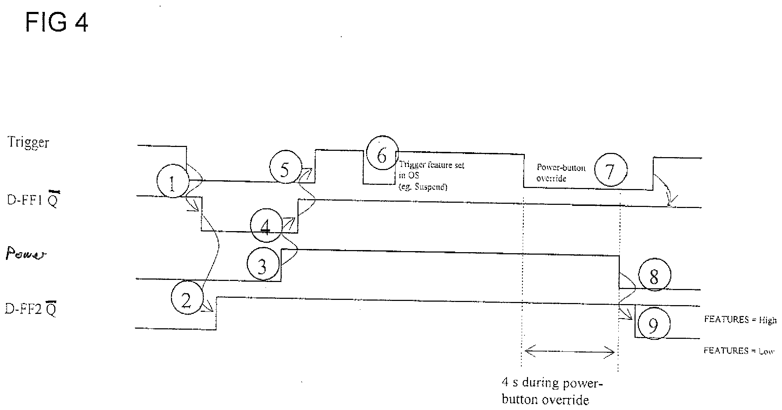

Die weitere Funktion der Stromversorgungsschaltung 30 wird nachfolgend anhand der in der Figur 4 dargestellten Signalpegel näher erläutert. In der Figur 4 sind von oben nach unten die Spannungen des Trigger-Signals 17, des invertierten Ausgangs *Q̅* des ersten Flip-Flops 33, des Power-Signals 15 und des invertierten Ausgangs *Q̅* des zweiten Flip-Flops 34 dargestellt.

Wird der Einschalttaster 14 in einer ersten Phase niedergedrückt, fällt der Spannungspegel an einem Knoten 42 zwischen Widerstand 32 und Einschalttaster 14 ab. Ein mit dem Knoten 42 verbundener Inverter 35B wandelt die abfallende Flanke in eine ansteigende Flanke um, die dem ersten D-Flip-Flop 33 als Taktsignal zugeführt wird.

Der Dateneingang *D* des ersten D-Flip-Flops 33 ist fest mit dem Ausgang des ersten Spannungswandlers 4 verbunden und liegt somit auf einem positiven Signalpegel. Daher wird das erste D-Flip-Flip 33 beim Anlegen einer positiven Flanke an seinen Takteingang in den eingeschalteten Zustand versetzt.

Der invertierte Ausgang *Q̅* des ersten D-Flip-Flops 33 gibt daher in einer zweiten Phase eine negative Flanke aus, die über eine Diode 43B auf den Knoten 42 zurückgekoppelt wird und das Trigger-Signal 17 am Knoten 42 auch nach Loslassen des Einschalttasters 14 auf einem niedrigen Niveau hält.

Darüber hinaus wird der invertierte Ausgang *Q̅* des ersten D-Flip-Flops 33 an den invertierten Reset-Eingang *R̅* des zweiten D-Flip-Flops 34 geschickt. Das zweite D-Flip-Flop 34 wird somit in den ausgeschalteten Zustand versetzt.

Der invertierte Ausgang *Q̅* des zweiten D-Flip-Flops 34 wird somit auf ein hohes Spannungsniveau geschaltet und versorgt den Transistor 37 mit einer Schaltspannung, so dass der zweite Spannungswandler 7 und somit auch die Energieverwaltungsschaltung 8 mit einer Betriebsspannung versorgt werden. Der Energieverwaltungsschaltung 8 wird ebenfalls das Signal des Knotens 42 zugeführt, so dass die Energieverwaltungsschaltung 8 die Betätigung des Einschalttasters 14 erkennt und weitere Komponenten des elektronischen Gerätes aktiviert, um es in einen Betriebszustand zu versetzen.

Die Energieverwaltungsschaltung 8 initialisiert sich nach Bereitstellen einer Betriebsspannung zunächst selbst und fragt dann die mit ihr verbundenen Steuersignale ab, um auf eine Anforderung reagieren zu können. Wie oben beschrieben wird der Spannungspegel am Knoten 42 gehalten, so dass die Energieverwaltungsschaltung 8 auch noch zeitverzögert das Betätigen des Einschalttasters 14 erkennt. Daraufhin versorgt sie an sie angeschlossene Komponenten mit einer Betriebsspannung, so dass das Power-Signal 15, das den Betriebszustand des elektronisches Gerätes anzeigt, in einer dritten Phase auf ein hohes elektrisches Niveau ansteigt.

Der daran angeschlossene Inverter 35C invertiert das Signal und führt es über eine weitere Diode 43C dem invertierten Reset-Eingang *R̅* des ersten D-Flip-Flops 33 zu. In einer vierten Phase wird das erste D-Flip-Flop 33 daher zurückgesetzt, so dass dessen invertiertes Ausgangssignal *Q̅* zurück auf ein hohes Niveau gesetzt wird.

In einer fünften Phase steigt die Spannung am Knoten 42 daher wieder an, da sie nun nicht mehr über die Diode 43B auf einem niedrigen Niveau gehalten wird. Damit ist der Einschaltvorgang des elektronischen Gerätes abgeschlossen und der normale Betrieb beginnt.

Im Betrieb des elektronischen Gerätes, insbesondere bei Computern gemäß der ACPI-Spezifikation, können dem Einschalttaster 14 unterschiedliche Funktionen zugeordnet werden. Beispielsweise wird in einem Betriebs-Zustand ein an den Computer angeschlossenes Display deaktiviert oder ein so genannter Suspend-oder Bereitschaftszustand aktiviert, in dem Teile des Computers abgeschaltet oder gedrosselt werden.

In einer in der Figur 4 als sechste Phase dargstellten Periode wird der Einschalttaster 14 nur kurz, insbesondere kürzer als 4 s lang, betätigt. Die Energieverwaltungsschaltung 8 erkennt dieses Signal und versetzt den Computer zum Beispiel in einen Suspend-Zustand, bei dem eine eingeschränkte Funktion noch möglich ist. Während dieser Phase verbleibt das Power-Signal 15 auf einem hohen Niveau, weil das erste Flip-Flop 33 über das Power-Signal 15 im ausgeschalteten Zustand gehalten wird. Somit ändert sich der Schaltzustand der Energieversorgungsschaltung 30 nicht.

In einer siebten Phase wird der Einschalttaster 14 für einen verhältnismäßig langen Zeitraum, insbesondere für mehr als 4 s, betätigt. Die Energieverwaltungsschaltung 8 erkennt dies als Anforderung, das elektronische Gerät vollständig auszuschalten.

In einer achten Phase setzt sie das Power-Signal 15 daher auf einen niedrigen Wert. Hierzu ist die entsprechende Signalleitung über einen Pull-Down-Widerstand 44 mit Masse verbunden. Das bislang über den Inverter 35C und die Diode 43C bereitgestellte Reset-Signal fällt ab, so dass die Blockierung des ersten D-Flip-Flops 33 wegfällt. Um einen unbeabsichtigten Schaltvorgang des ersten D-Flip-Flops in dieser Phase zu vermeiden, sollte der Einschalttaster 14 entprellt werden.

In einer neunten Phase wird die durch den Inverter 35C invertierte Flanke des Power-Signals 15 dem Takteingang des zweiten D-Flip-Flops 34 zugeführt. Der zweite D-Flip-Flop 34 liest daraufhin das durch die Inverter 35D, 35E und 35F invertierte und verzögerte Feature-Signal 16 aus. Beispielsweise kann durch die Energieverwaltungsschaltung 8 ein im Betrieb des Computers von einem Teil des Chipsatzes bereitgestelltes Steuersignal oder eine BIOS-Einstellung abgefragt und als Feature-Signal 16 zur Verfügung gestellt werden.

Befindet sich das Feature-Signal 16 kurz vor dem Abfallen des Power-Signals 15 auf einem hohen Niveau, beispielsweise weil eine Netzwerkkarte aktiv bleiben soll, um ein daran angeschlossenes Netzwerk auf die Übermittlung eines so genannten WoL-Paketes zu überwachen, wird der Dateneingang D des zweiten D-Flip-Flops 34 auf ein niedriges Niveau gesetzt und das zweite D-Flip-Flop 34 somit in einen ausgeschalteten Zustand versetzt. Somit gibt der invertierte Ausgang *Q̅* des zweiten D-Flip-Flops 34 ein hohes Ausgangssignal aus und sorgt dafür, dass der Transistor 37 den zweiten Spannungswandler 7 und damit die Energieverwaltungsschaltung 8 auch weiterhin mit elektrischer Energie versorgt.

Liegt das Feature-Signal 16 hingegen auf einem niedrigen Niveau, wird das zweite D-Flip-Flop 34 beim Ausschalten in einen eingeschalteten Zustand versetzt, so dass das Ausgangssignal *Q̅* auf ein niedriges Niveau abfällt und der Transistor 37 sperrt. Das bedeutet, dass die Energieverwaltungsschaltung 8 von der Batterie 2 getrennt wird, wenn das Feature-Signal 16 nicht angibt, dass eine Weiterversorgung der Energieverwaltungsschaltung 8 erforderlich ist.

Die in der Figur 3 dargestellte diskrete Schaltung benötigt zu ihrem Betrieb nur sehr wenig elektrische Energie. Beispielsweise kann die Stromaufnahme der zwei D-Flip-Flops 33 und 34, der Inverter 35 und des ersten Spannungswandlers 4 auf eine Stromaufnahme von weniger als 0,1 mA begrenzt werden. Hierzu ist es insbesondere nötig, geeignete verlustarmen Bauteile zu verwenden. Beispielsweise nimmt der zweifache D-FlipFlop-Baustein MM74C74 der Firma Fairchild eine Leistung von weniger als 50 nW auf. Der sechsfache Inverter-Bautein MM74C04 derselben Firma benötigt weniger als 10 nW Leistung. Ein Spannungswandler der Serie Torex XC6216 benötigt im Betrieb weniger als 5 *A.

Bei einem Gesamtstromverbrauch von 0.1 mA kann eine vollständig aufgeladene Batterie eines tragbaren Computers mit einer üblichen Ladekapazität von 3000 bis 6000 mA/h die Steuerschaltung 5 für eine Vielzahl von Monaten oder sogar Jahren mit elektrischer Energie versorgen. Neben einer Reduzierung des Energiebedarfs im ausgeschalteten Zustand ergibt sich daraus der zusätzliche Vorteil, dass Batterien bereits beim Hersteller des Computersystems eingesetzt werden können. Bei einer späteren Inbetriebnahme des Computers ist dann immer noch Ladung in der Batterie 2 gespeichert.

Herkömmliche Stromversorgungsschaltungen ermöglichen ein Einsetzen einer geladenen Batterie bereits beim Hersteller in der Regel nicht, weil bekannte Stromversorgungsschaltungen die Batterie bei einem verhältnismäßig langen Überseetransport oder einer Lagerzeit von mehreren Wochen oder Monaten bei einem Verkäufer tiefentladen und somit zu einer Beschädigung der Batterie 2 führen würden.

Die Stromversorgungsschaltung 30 wurde mit Bezugnahme auf die von Computern bekannten Betriebs- bzw. Energiesparzustände beschrieben. Selbstverständlich kann eine solche oder funktional ähnliche Schaltung auch bei anderen elektronischen Geräten, die über unterschiedliche Betriebs- oder Energiesparzustände verfügen, angewendet werden, um deren Energieverbrauch in geeigneten Betriebszuständen weiter zu senken. Beispielsweise braucht eine Energieverwaltungsschaltung eines Videorekorders nicht mit elektrischer Energie versorgt zu werden, wenn der Videorekorder zuvor nicht programmiert wurde.

### Bezugszeichenliste

- 1: Stromversorgungsschaltung
- 2: Batterie
- 3: Spannungseingang
- 4: erster Spannungswandler
- 5: Steuerschaltung
- 6: Schalter
- 7: zweiter Spannungswandler
- 8: Energieverwaltungsschaltung
- 9: erste Komponente
- 10: zweite Komponente
- 11: erster Steuereingang
- 12: zweiter Steuereingang
- 13: dritter Steuereingang
- 14: Einschalttaster
- 15: Power-Signal
- 16: Feature-Signal
- 17: Trigger-Signal

- 20: erster Zustand
- 21: zweiter Zustand
- 22: Zustandsänderung (20 → 21)
- 23: Zustandsänderung (21 → 20)
- 24: Zustandsänderung (21 → 21)
- 30: Stromversorgungsschaltung
- 31: Diode
- 32: Widerstand
- 33: erster D-Flip-Flop
- 34: zweiter D-Flip-Flop
- 35: Inverter
- 36: Diode
- 37: Transistor
- 38: Diode
- 39: Kondensator
- 40: Diode
- 41: Widerstand
- 42: Knoten
- 43: Diode
- 44: Widerstand

## Patentansprüche

1. Stromversorgungsschaltung (1, 30) für einen Computer umfassend eine Einstellung für wenigstens eine Aufweckfunktion, aufweisend
einen Energiespeicher zum Speichern elektrischer Energie, eine Einschalttaste (14), eine Energieverwaltungsschaltung (8), die dazu eingerichtet ist, die Einschalttaste (14) auf eine Betätigung zu überwachen und den Computer zeit- oder ferngesteuert in einen Betriebszustand zu schalten, in dem der Computer mit elektrischer Energie versorgt wird, eine zwischen den Energiespeicher und die Energieverwaltungsschaltung (8) geschaltete Steuerschaltung (5), die dazu eingerichtet ist, die Energieverwaltungsschaltung (8) in wenigstens einem ersten Zustand (20) elektrisch von dem Energiespeicher zu trennen und die Energieverwaltungsschaltung (8) in wenigstens einem zweiten Zustand (21) und beim Betätigen der Einschalttaste (14) mit dem Energiespeicher zu verbinden, und wenigstens eine Halteschaltung, die dazu eingerichtet ist, die Steuerschaltung nach der Betätigung des Einschalttasters (14) im zweiten Zustand zu halten, bis ein mit einem Steuereingang (12) der Steuerschaltung (5) verbundenes Steuersignal angibt, dass sich der Computer in einem Betriebszustand befindet und ein Startvorgang des elektronischen Gerätes abgeschlossen ist, wobei der erste Zustand (20) einem ausgeschalteten Zustand und der zweite Zustand (21) einem Betriebszustand oder einem Bereitschaftszustand des Computers entspricht und die Steuerschaltung (5) weiterhin dazu eingerichtet ist, das Steuersignal und die Einstellung der wenigstens einen Aufweckfunktion abzufragen und im zweiten Zustand zu bleiben, wenn das Steuersignal angibt, dass sich der Computer in einem Betriebszustand befindet, und/oder die Einstellung angibt, dass die wenigstens eine Aufweckfunktion aktiviert ist, wobei der Computer eine Mehrzahl von Komponenten (9, 10) umfasst und die Energieverwaltungsschaltung (8) dazu eingerichtet ist, in dem Betriebszustand alle für den Betriebszustand nötigen Kernkomponenten (9, 10) des Computers, umfassend wenigstens einen Hauptprozessor, mit elektrischer Energie zu versorgen, in dem ersten Zustand (20) keine Komponenten des Computers mit elektrischer Energie zu versorgen und in dem zweiten Zustand (21) wenigstens eine ausgewählte Komponente (10) des Computers mit elektrischer Energie zu versorgen, wobei die ausgewählte Komponente (10) dazu eingerichtet, das Auftreten eines vorbestimmten Ereignisses zum Aufwecken des Computers zu erkennen und beim Erkennen des vorbestimmten Ereignisses der Energieverwaltungsschaltung (8) zu signalisieren, dass der Computer in den Betriebszustand versetzt werden soll.

2. Stromversorgungsschaltung (1, 30) nach Anspruch 1,
**dadurch gekennzeichnet, dass**
der Computer wahlweise mittels des Energiespeichers oder einer externen Energiequelle mit elektrischer Energie versorgbar ist und die Energieverwaltungsschaltung (8) bei Versorgung des Computers von der externen Energiequelle dauerhaft mit elektrischer Energie versorgt wird.

3. Stromversorgungsschaltung (1, 30) nach einem der Ansprüche 1 bis 2, **dadurch gekennzeichnet, dass** die Steuerschaltung (5) die wenigstens eine Halteschaltung umfasst.

4. Stromversorgungsschaltung (1, 30) nach einem der Ansprüche 1 bis 3, **dadurch gekennzeichnet, dass** die Halteschaltung dazu eingerichtet ist, die Steuerschaltung (5) solange im zweiten Zustand zu halten, bis ein Ausschaltsignal des Computers erkannt wird.

5. Computer mit einer Stromversorgungsschaltung (1, 30) nach einem der Ansprüche 1 bis 4.

6. Energiesparverfahren das auf einem Computer mit einer Stromversorgungsschaltung nach einem der Ansprüche 1 bis 4 ausgeführt wird, umfassend die Schritte:
- Verbinden des Energiespeichers mit der Steuerschaltung (5),
- Rücksetzen der Steuerschaltung (5) in einen ersten Zustand (20), in dem die Energieverwaltungsschaltung (8) nicht mit elektrischer Energie versorgt wird,
- Überwachen des Einschalttasters (14) auf eine Betätigung durch die Steuerschaltung (5),
- Versetzen der Steuerschaltung (5) in einen zweiten Zustand (21), in dem die Energieverwaltungsschaltung (8) mit elektrischer Energie versorgt wird, wenn ein Betätigen des Einschalttasters (14) erkannt wird,
- Halten des zweiten Zustands (21) wenigstens bis ein Startvorgang des Computers abgeschlossen ist,
- Überwachen wenigstens eines Steuersignals, das angibt, dass der Computer den Betriebszustand verlassen hat, und wenigstens eines zweiten Steuersignals, das angibt, ob wenigstens eine Aufweckfunktion des Computers aktiviert ist, und
- Versetzen der Steuerschaltung (5) in den ersten Zustand (20), wenn erkannt wurde, dass der Computer den Betriebszustand verlassen hat und keine Aufweckfunktion aktiviert ist.

## Claims

1. Power supply circuit (1, 30) for a computer comprising a setting for at least one wake-up function, comprising
an energy storage for storing electric energy,
a power button (14),
an energy management circuit (8), which is adapted to monitor the power button (14) for actuation and to switch the computer time-controlled or remote-controlled into an operating state in which the computer is supplied with electric energy, a control circuit (5) interposed between the energy storage and the energy management circuit (8), which is adapted to electrically separate the energy management circuit (8) from the energy storage in at least one first state (20) and to connect the energy management circuit (8) to the energy storage in at least one second state and upon actuation of the power button (14),
and at least one holding circuit, which is adapted to hold the control circuit in the second state after actuation of the power button (14) until a control signal connected to a control input (12) of the control circuit (5) indicates that the computer is in an operating state and a start-up process of the electronic device is completed, wherein the first state (20) corresponds to a power-off state and the second state (21) corresponds to an operating state or a stand-by state of the computer, and the control circuit is further adapted to request the control signal and the setting of the at least one wake-up function and to remain in the second state when the control signal indicates that the computer is in an operating state, and/or the setting indicates that the at least one wake-up function is activated, wherein the computer comprises a plurality of components (9, 10) and the energy management circuit (8) is adapted to supply all core components (9, 10) of the computer required for the operating state, including at least a main processor, with electric energy in the operating state, to supply none of the components of the computer with electric energy in the first state (20) and to supply at least one selected component (10) of the computer with electric energy in the second state (21), wherein the selected component (10) is adapted to detect occurrence of a predetermined event for waking up the computer and, upon detection of the predetermined event, to signal to the energy management circuit (8) that the computer is to be brought into the operating state.

2. Power supply circuit (1, 30) according to claim 1, **characterized in that**
the computer can be supplied with electric energy by means of the energy storage or an external energy source and the energy management circuit (8) is permanently supplied with electric energy in the case that the computer is supplied from the external energy source.

3. Power supply circuit (1, 30) according to one of claims 1 to 2, **characterized in that** the control circuit (5) comprises the at least one holding circuit.

4. Power supply circuit (1, 30) according to one of claims 1 to 3, **characterized in that** the holding circuit is adapted to hold the control circuit (5) in the second state until a power-off signal of the computer is detected.

5. Computer having a power supply circuit (1, 30) according to one of claims 1 to 4.

6. Energy saving method which is performed on a computer having a power supply circuit according to one of claims 1 to 4, comprising the steps of:
- connecting the energy storage to the control circuit (5),
- resetting the control circuit (5) in a first state (20), in which the energy management circuit (8) is not supplied with electric energy,
- monitoring the power button (14) for actuation by the control circuit (5),
- bringing the control circuit (5) into a second state (21), in which the energy management circuit (8) is supplied with electric energy, when an actuation of the power button (14) is detected,
- holding the second state (21) at least until a start-up process of the computer is completed,
- monitoring at least a control signal, which indicates that the computer left the operating state, and at least a second control signal, which indicates whether at least a wake-up function of the computer is activated, and
- bringing the control circuit (5) into the first state (20) when it was detected that the computer left the operating state and no wake-up function is activated.

## Revendications

1. Circuit d'alimentation en courant (1, 30) pour un ordinateur comprenant un réglage pour au moins une fonction de réveil, présentant
un accumulateur d'énergie destiné à accumuler l'énergie électrique,
une touche (14) de mise en marche,
un circuit de gestion d'énergie (8) qui est configuré pour contrôler un actionnement de la touche (14) de mise en marche et pour connecter l'ordinateur, par commande du temps ou par télécommande, dans un état de fonctionnement dans lequel l'ordinateur est alimenté en énergie électrique,
un circuit de commande (5) connecté entre l'accumulateur d'énergie et le circuit de gestion d'énergie (8), lequel est configuré pour couper le circuit de gestion d'énergie (8) électriquement de l'accumulateur d'énergie dans au moins un premier état (20) et pour connecter le circuit de gestion d'énergie (8) à l'accumulateur d'énergie dans au moins un deuxième état (21) et lors de l'actionnement de la touche (14) de mise en marche,
et au moins un circuit de maintien qui est configuré pour maintenir le circuit de commande dans un deuxième état après l'actionnement de la touche (14) de mise en marche jusqu'à ce qu'un signal de commande connecté à une entrée de commande (12) du circuit de commande (5) indique que l'ordinateur se trouve dans un état de fonctionnement et qu'une opération de démarrage de l'appareil électronique soit achevée, le premier état (20) correspondant à un état hors fonction et le deuxième état (21) correspondant à un état de fonctionnement ou à un état de disponibilité de l'ordinateur, et le circuit de commande (5) étant en outre configuré pour interroger le signal de commande et le réglage de l'au moins une fonction de réveil et pour rester dans le deuxième état lorsque le signal de commande indique que l'ordinateur se trouve dans un état de fonctionnement et/ou lorsque le réglage indique que l'au moins une fonction de réveil est activée, l'ordinateur comprenant une pluralité de composants (9, 10) et le circuit de gestion d'énergie (8) étant configuré, en état de fonctionnement, pour alimenter en énergie électrique tous les composants essentiels (9, 10) de l'ordinateur, nécessaires pour l'état de fonctionnement, comprenant au moins un processeur principal, pour n'alimenter aucun composant de l'ordinateur en énergie électrique dans le deuxième état de fonctionnement et, dans le deuxième état, pour alimenter en énergie électrique au moins un composant (10) sélectionné de l'ordinateur, le composant (10) sélectionné étant configuré pour identifier l'apparition d'un événement prédéterminé destiné à réveiller l'ordinateur et, lors de l'identification de l'événement prédéterminé, pour signaler au circuit de gestion d'énergie (8) que l'ordinateur doit être mis dans l'état de fonctionnement.

2. Circuit d'alimentation en courant (1, 30) selon la revendication 1,
**caractérisé en ce que**
l'ordinateur peut être alimenté en énergie électrique de manière sélective au moyen de l'accumulateur d'énergie ou d'une source d'énergie externe et **en ce que** le circuit de gestion d'énergie (8), lors de l'alimentation de l'ordinateur par la source d'énergie externe, est alimenté en énergie électrique de manière permanente.

3. Circuit d'alimentation en courant (1, 30) selon l'une quelconque des revendications 1 à 2, **caractérisé en ce que** le circuit de commande (5) comprend l'au moins un circuit de maintien.

4. Circuit d'alimentation en courant (1, 30) selon l'une quelconque des revendications 1 à 3, **caractérisé en ce que** le circuit de maintien est configuré pour maintenir le circuit de commande (5) dans le deuxième état jusqu'à ce qu'un signal d'arrêt de l'ordinateur soit identifié.

5. Ordinateur doté d'un circuit d'alimentation en courant (1, 30) selon l'une quelconque des revendications 1 à 4.

6. Procédé d'économie d'énergie qui est exécuté sur un ordinateur doté d'un circuit d'alimentation en courant selon l'une quelconque des revendications 1 à 4, comprenant les étapes :
- connexion de l'accumulateur d'énergie au circuit de commande (5),
- réinitialisation du circuit de commande (5) dans un premier état (20) dans lequel le circuit de gestion d'énergie (8) n'est pas alimenté en énergie électrique,
- contrôle de la touche (14) de mise en marche afin de constater un actionnement par le circuit de commande (5),
- mise du circuit de commande (5) dans un deuxième état dans lequel le circuit de gestion d'énergie (8) est alimenté en énergie électrique lorsqu'un actionnement de la touche (14) de mise en marche est identifié,
- maintien du deuxième état (21) au moins jusqu'à ce qu'une opération de démarrage de l'ordinateur soit achevée,
- contrôle d'au moins un signal de commande indiquant que l'ordinateur a quitté l'état de fonctionnement, et d'au moins un deuxième signal de commande indiquant si au moins une fonction de réveil de l'ordinateur est activée, et
- mise du circuit de commande (5) dans le premier état (20) lorsqu'il a été identifié que l'ordinateur a quitté l'état de fonctionnement et qu'aucune fonction de réveil n'est activée.
